(19) Europäisches Patentamt
European Patent Office
Office européen des brevets

(11) EP 2 337 418 A1

(12) **EUROPEAN PATENT APPLICATION**

(43) Date of publication:
**22.06.2011 Bulletin 2011/25**

(51) Int Cl.:
*H04W 72/12* $^{(2009.01)}$

(21) Application number: **09290968.8**

(22) Date of filing: **18.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Alcatel Lucent**
**75008 Paris (FR)**

(72) Inventors:
• **Dartmann, Guido**
**52072 Aachen (DE)**

• **Gong, Xitao**
**52064 Aachen (DE)**

(74) Representative: **Richardt, Markus Albert**
**Richardt Patents Trademarks**
**Leergasse 11**
**65343 Eltville am Rhein (DE)**

Remarks:
Amended claims in accordance with Rule 137(2) EPC.

(54) **Dynamically scheduling connections of mobile stations in neighbouring cells in a mobile telecommunication network**

(57) The invention provides a method of dynamically scheduling connections of a plurality of mobile stations (608) in a mobile telecommunication network (100), the connections being scheduled in time slots, wherein in each time slot the connection of one mobile station is scheduled in each cell (102), wherein the order of scheduled mobile stations is rearranged according to an opportunistic round robin scheduling scheme or to a quasi fair scheduling scheme, and wherein the rearranged order of scheduled mobile stations minimizes signal interferences in the mobile telecommunication network.

Fig. 2

EP 2 337 418 A1

## Description

Field of the invention

The invention relates to a method for dynamically scheduling connections of mobile stations in a mobile telecommunication network.

## Background and related art

In a multiuser multicell unicast scenario with frequency reuse-1 the most throughput limiting factor is the intercell interference. In common mobile telecommunication networks interference is mitigated with beamforming techniques.

## Summary of the invention

The invention provides a method of dynamically scheduling connections of a plurality of mobile stations in a mobile telecommunication network. The connections are scheduled in timeslots. In each timeslot the connection of one mobile station is scheduled in each cell of the mobile telecommunication network. The order of scheduled mobile stations is rearranged according to an opportunistic round-robin scheduling scheme or to a quasi-fair scheduling scheme. The rearranged order of scheduled mobile stations minimizes signal interferences in the mobile telecommunication network.

Opportunistic round-robin scheduling is understood herein as a round-robin scheduling, wherein the order of scheduling the connections can be changed in a round. This means, in every round every mobile station is scheduled once. When all mobile stations have been scheduled once, the next round begins. The next round may schedule the connections of the mobile stations in a different order. It is to be noted that according to the opportunistic round-robin scheduling every mobile station is scheduled once per round, only the order per round may be changed.

A quasi-fair scheduling scheme means that each mobile station is scheduled equally of and in a given time interval compared to other mobile stations of the mobile telecommunication network. This means, that for example each mobile station may be scheduled two or three times in a row. The only criterion is that in a certain time interval all mobile stations have to be scheduled equally.

According to embodiments of the invention the method comprises the steps of determining a first mobile station located in a first cell of the mobile telecommunication network. The first mobile station has the mobile connection to the mobile telecommunication network with the lowest quality in comparison to all other mobile stations in the mobile telecommunication network. Then, at least one second cell is determined, which is a neighboring cell of the first cell. It is to be noted that also a plurality of second cells neighboring the first cell may be determined. In the next step, a first group of mobile stations is determined, the first group comprising mobile stations being scheduled during a first scheduling time. The first group is determined such that scheduling the first group maximizes the mobile telecommunication network's sum rate. Then, the connections of mobile stations of the first group are scheduled during the first scheduling time.

Afterwards, at least one second group of mobile stations is determined, each of the at least one second group comprises mobile stations being scheduled during a scheduling time differing from the first scheduling time. The scheduling time of each of the at least one second group also differs from the scheduling time of another group. This means no group is scheduled at the same time with another group. Scheduling the second group also maximizes the mobile telecommunication network's sum rate. Then the connections of mobile stations of the at least one second group are scheduled during the respective scheduling time.

According to embodiments of the invention the signal beamforming rates of signals being transmitted to the group being scheduled are adapted for reducing signal interferences.

According to embodiments of the invention the beamforming rates are adapted based on long time channel state information (CSI).

According to embodiments of the invention each of the at least one second group is determined according to a round-robin scheduling scheme, an opportunistic round-robin scheduling scheme or to a quasi-fair scheduling scheme.

According to embodiments of the invention a matrix comprises in each column a group and in each row mobile stations whose connections are controlled by one base station. In other words the rows of the matrix represent a certain base station of the network and the columns represent a group to be scheduled during a certain scheduling time. Thus an entry in the matrix consists of a mobile station being scheduled in the corresponding scheduling step in the cell belonging to the base station represented by the respective row of the matrix.

According to embodiments of the invention the number of columns of the matrix is equal to the lowest common multiple of the numbers of mobile stations in the plurality of groups. This means, that the number of scheduling steps is equal to the lowest common multiple of the numbers of mobile stations in the plurality of groups. It is also possible that the number of scheduling steps is equal to a common multiple of the numbers of mobile stations. It is not necessarily the lowest common multiple. This is advantageous because using a common multiple of the numbers of mobile stations in the plurality of groups results in the possibility to apply an opportunistic round-robin scheduling or a round-robin scheduling, or that all users in a cell are scheduled equally often. This means, if for example one group comprises four mobile stations, a second group comprises six mobile stations and a third group comprises five mobile stations, the number of columns of the matrix and the number of groups are 60. By using the lowest common multiple the computation effort is minimized. It is to be noted that the columns of the matrix represent the groups of mobile stations to be scheduled. The first column corresponds to the first group and each further column corresponds to one of the at least one second group.

According to embodiments of the invention the order of scheduling the first and the at least one second group is changed after scheduling connections of mobile stations of the at least one second group. This means, that, when all groups have been scheduled at least once, another order of scheduling the groups may be applied, or this order can be reused if the long-term CSI is still valid and not out-dated.

According to embodiments of the invention the scheduled connections are connections between a base station and a mobile station of the mobile communication network.

In another aspect the invention relates to a computer readable storage medium containing instructions that when executed by a base station cause the base station to perform a method according to embodiments of the invention.

In yet another aspect the invention relates to a mobile telecommunication apparatus comprising communication means for communicating with base stations of a mobile telecommunication network, a data storage and a processor, wherein the processor is adapted to perform a method according to embodiments of the invention.

It is to be noted that the mobile telecommunication apparatus may be a base station being adapted to coordinate at least a part of the mobile telecommunication network or another telecommunication apparatus being adapted to communicate with base stations of the mobile telecommunication network.

In yet another aspect the invention relates to a mobile telecommunication network comprising a plurality of mobile telecommunication apparatuses according to embodiments of the invention, a plurality of base stations and a plurality of mobile stations. The connections between the base stations and the mobile stations are scheduled according to embodiments of the invention.

Embodiments of the invention are advantageous because connections of the mobile stations of the mobile telecommunication network are scheduled in a fair way because of the opportunistic round-robin scheduling, round-robin scheduling or quasi-fair scheduling. By optimizing the transmit power according to a max-min fairness criterion inter-cell interferences are minimized.

To incorporate the fairness into the transmit optimization problem, the modified greedy user selection is considered in our work, where the user subject to strongest inter-cell interference is given highest priority for scheduling optimization. Meanwhile, the opportunistic round robin and quasi-fair scheduling constraint is imposed to guarantee the temporal fairness among the users. The post-processing of max-min fair power control is underlined to improve the Signal to Interference plus Noise Ratio (SINR) fairness.

In each user scheduling decision only one user per cell is scheduled. Additionally, using a realistic channel model, the spatial covariance matrix between user $i$ and cell $c$ has mostly one strong and a few weak eigenmodes. Therefore the beamforming can be done by eigenbeamforming.

The beamforming weight corresponding to the strongest eigenmode is used for transmission and only the transmit power is optimized according to max-min fairness criterion. As the result, in each iteration of user selection algorithm, only the transmit power is updated. In realistic systems only a limited number of base stations contributes the dominant inter-cell interference. Therefore, different clustering schemes are provided for the optimization problem. This strategy could be implemented with lower complexity compared to the network-wide optimization and the cooperation among these base stations can reduce the overhead of inter-base-station communication.

**Brief description of the drawings**

In the following preferred embodiments of the invention will be described, by way of example only, and with reference to the drawings in which:

Fig. 1 is a schematic view of a mobile telecommunication network;
Fig. 2 is a schematic view of a mobile telecommunication network;
Fig. 3 is a schematic view of a mobile telecommunication network;
Fig. 4 is a flow diagram of a method for scheduling connections;
Fig. 5 is a flow diagram of a method for scheduling connections; and
Fig. 6 is a block diagram of a telecommunication apparatus.

**Detailed description**

Like numbered elements in these Figs. are either identical elements or perform the same function. Elements which have been discussed previously will not necessarily be discussed in later Figs. if the function is identical.

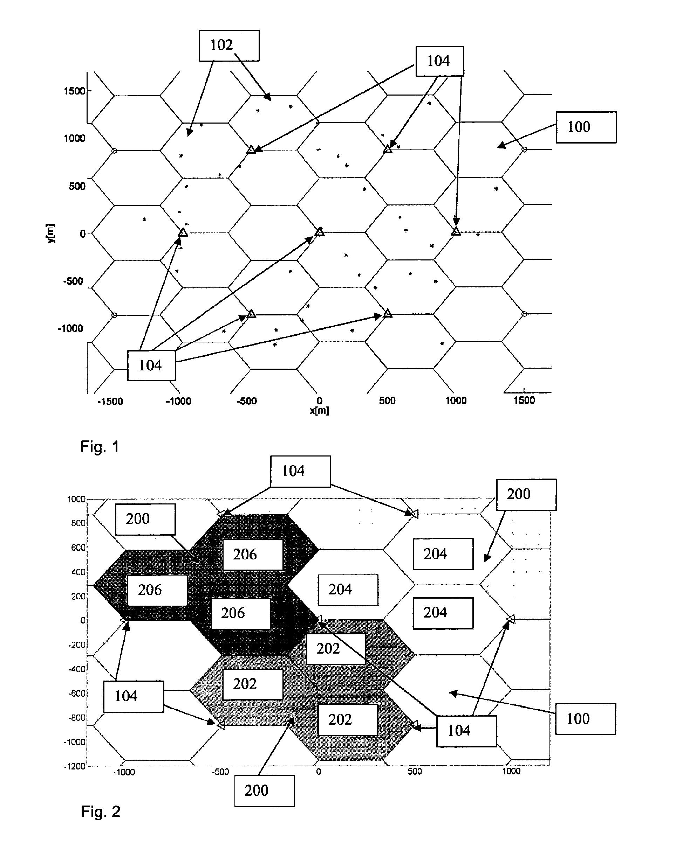

Fig. 1 is a schematic view of a part - or island - of the mobile telecommunication network 100. The mobile telecommunication network is sectorized into a plurality of cells 102, e.g. according to the WiMAX or the LTE standard. Each cell is served by a base station 104. Fig. 1 shows the network island with an exemplified user distribution. It is to be noted that not every cell is marked with the reference numeral 102. For a person skilled in the art it is obvious that each hexagon in fig. 1 is a cell 102. Each base station 104 serves three cells 102.

In this embodiment, the beamforming weights are optimized for the given temporal user scheduling decision based on spatial covariance matrices $\mathbf{R}_{c,i}$ between a user $^i$ and a cell $^c$. Beside a max-min balanced mean SINR of the users scheduled in a given scheduling step, the temporal user scheduling decision itself is done in a smart way, so that the sum rate of the system is maximized. It is assumed that a central unit coordinates the scheduling decisions of an island $of\ ^{N}c$ cells with the capability of beamforming, jointly.

Beamforming and temporal user scheduling are based only on spatial correlation information for a multicell multiuser scenario with temporal fairness. There are two possibilities of minimizing signal interferences.

In a global embodiment, the optimization of beamforming and user scheduling is done for the complete island.

In a local embodiment, small clusters of cells are considered according to Fig. 2. Three cells are combined to a cluster 200. The three cells 202 form one cluster 200, the three cells 204 form one cluster 200 and the three cells 206 form one cluster 200.

Inside these clusters 200 the beamforming and scheduling optimization is performed similar to the global solution or by an exhaustive greedy search. The static clustering is done in a way that the intercluster interference is minimized by the antenna pattern of the base stations 104.

Then the intracluster interference is minimized locally with the same optimization, which was also used for the global optimization. Afterwards the residual intercluster interference is minimized with a so called cluster tuning or intercluster optimization according to a greedy strategy.

The following scheme can be used for an arbitrary scenario. One scenario can be a global optimization of the complete network and another solution can be a local cluster application of this scheme.

In each user scheduling decision only one user per cell is scheduled. Additionally, using a realistic channel model, the spatial covariance matrix between user $^i$ and cell $^c$ has mostly one strong and a few weak eigenmodes. Therefore the beamforming can be done by eigenbeamforming. Without any power control and smart user scheduling, this beamforming technique results in an unfair mean SINR distribution among the scheduled users in a given scheduling decision. Some users, especially the cell edge users, are subject to strong intercell interference if adjacent cells form beams in the direction of these users. Therefore a coordination of the beams is needed. This can be performed in two steps:

- To improve the fairness among the currently scheduled users, a fair max-min based mean SINR balancing is performed. Thereby the SINR balancing is done with a fair max-min formulation of the power control problem, which results in low complex linear program (see next section).
- To avoid interfering beams, a smart user scheduling is performed. Consider that strong interference will result into some users, who need much power for an improvement of their mean SINR in the max-min power control step. Then there will be less power for the other users. The result will be a low balanced for mean SINR for all users in this scheduling step. This problem is solved with a smart temporal greedy user scheduling.

Thereby the beamforming is jointly optimized during the scheduling optimization. The scheduling algorithm itself consists of two parts:

- The weakest user in the system is determined by an interference metric.
- According to a greedy strategy, the adjacent cells schedule those users who maximize the overall sum rate of this scheduling step. For the computation of the sum rate, the beamforming weights are computed including power control with the goal of a balanced mean SINR.

The above described scheme can be used for a global optimization or for small cluster consisting of three cells according to the clustering scheme in Fig. 2.

In the case the scheduling and beamforming is optimized locally inside each cluster an additional improvement of the sum rate can be achieved by an intercluster optimization.

The reduction of the intercluster interference is performed in the same way: The resulting intracluster scheduling decision can be rearranged by a greedy decision, whereas the scheduling decisions within a cluster are unchanged.

At a time instant only one user is assumed to be scheduled by each base station 104 with optimized beamforming weights and transmit power. Considering the trade-off between the received SINR of the selected user and the intercell interference it subjects to, the beamforming and power allocation is optimized according to a max-min fairness criterion.

Since the optimization is based on the long-term channel state information (CSI), the beamforming weights can be chosen according to the strongest eigenmode of the spatial covariance matrix. Without the power control and ignoring the intercell interference to each user, the received signal power is equal to the first element of the spatial covariance matrix concerning the CSI between itself and its allocated base station. This scheme will result in unfair mean SINR distribution since the user far away from the base station (cell-edge user) is liable to have strong intercell interference. Therefore, the transmit power of each user in the same scheduling step is optimized aiming to maximize the worst mean SINR of all scheduled users, when subject to generalized power constraint, i.e., limited sum transmit power of all base stations or limited transmit power of individual base station. The optimization problem can be reformulated as the linear programming problem and efficiently solved. The main advantage of this scheme is its low complexity and thus feasible to be integrated into the scheduling algorithm.

The optimization of the beamforming and power control achieves a fair max-min based distribution of the mean SINR among the users per scheduling step. Beside a balanced mean SINR, the maximization of sum rate is also an optimization criterion. This can be fulfilled with a smart scheduling of the users in a cooperative scheme. Base stations 104 schedule only those users who maximize the sum rate after the optimization of the beamforming and power control for the current scheduling step. This scheme can be also understood as an avoidance of interfering beams. Thus, the base stations only schedule those users and form a beam to them, if no user is subject to interference of the beam of the other base station. This scheme will result in a larger balanced mean SINR per scheduling step. Because less power is required for those users who are subject to strong intercell interference and then all users can profit after the mean SINR balancing.

The search of the optimum scheduling combination for all users in the network is NP-hard, therefore only suboptimal solutions can be found. A promising low complex scheme for NP-hard problems is a greedy-scheme. To introduce the greedy scheme, at first a new data structure must be formulated. Consider a so called scheduling matrix, where each entry is a user index, each column corresponds to a scheduling step and each row corresponds to a base station. Thus, an entry of the user number in this matrix is an allocation of a user to the corresponding base station and scheduling step; or in another formulation: For each scheduling step, the allocation of users to base stations is given in a column vector of the scheduling matrix. To achieve a fair round-robin based scheduling, the number of scheduling steps is equal to the lowest common multiple of all user numbers per cell. It is to be noted that any common multiple of all user numbers per cell may be used for the number of scheduling steps. If the number of scheduling steps would - even for the lowest common multiple - become too big and thus would render the optimization method too complex, a smaller number of scheduling steps can be chosen. This would make the method less fair for all users. But as long as the number is high enough this does not concern too much.

Then the greedy algorithm tries to maximize the sum rate of each scheduling step in a way that it finds the optimal combinations of user indexes in these column vectors. For each column the greedy algorithm estimates at first the weakest user in the network. The weakest user corresponds to the user, who is subject to the strongest interference. The computation of the interference based on the computation of the eigenbeams to all users and a summation of the resulting interference power. After the estimation of the weakest user, the greedy algorithm continues with the selection of users of the other cells and a computation of the corresponding beamforming weights and power values. Thereby the greedy algorithm starts with the neighbouring cells of the cell where the weakest user located.

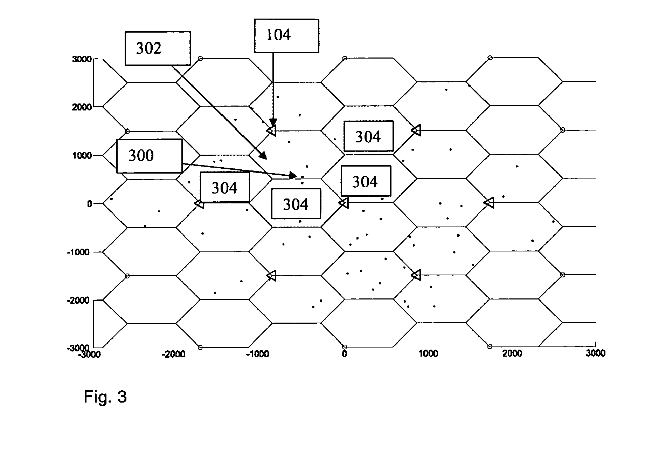

The neighbourhood is defined by the distance and the pattern of the network. In fig. 3, an example for a neighbourhood is depicted. The weakest user 300 is inside cell 302 and close to the cell boarder. The largest amount of interference it subject to is caused by cells 304. They are the neighbouring cells of cell 302. Cells 306 are also in the neighbourhood, but the antenna pattern of base station 104 reduces the inter-cell interference of them. Thus only cells 304 must be considered in this case.

After an optimization of the neighbourhood (cells 304) the neighbours of cells 304 are optimized afterwards. This principle is continued until the complete network is optimized. In each scheduling step, only those users are selected in a cell, maximizing the sum rate of the complete network in this scheduling step.

To achieve a fair scheduling scheme, users are scheduled in the round robin manner. The length or number of scheduling steps per round is given by the number of users in this cell. After this round a user can be scheduled again. Thus all users are scheduled equally often, with a low delay. Therefore the proposed greedy scheduling scheme additionally fulfils the temporal fairness constraint. After all scheduling steps, which is at minimum the lowest common multiple of all user numbers per cell the algorithm terminates. Then the scheduling allocation and the beamforming and power weights are computed based on long-term CSI. The a priori computed scheduling order and the beamforming and power weights can be reused several times until the long-term statistics have changed. Therefore, a low overhead and additionally a low computation complexity are achieved.

The clustering scheme is done by exploiting the antenna pattern of each base station 104 in a way that the interference between the clusters 200 is minimized, see Fig. 2. Therefore, minimized intercluster interference will result.

Inside each cluster 200 the beamforming and power weights and the scheduling order is computed according to the proposed greedy opportunistic round robin scheduling (ORRS) scheme. Thus the beamforming and power weights and the scheduling order is computed locally only for one cluster 200.

The cluster wise optimization of the scheduling allocation and beamforming weights reduces the needed amount of long-term channel state information. Only the long-term CSI of three base stations 104 and all allocated users to these base stations 104 is needed. Secondly, a reduce backbone communication among the bases stations 104 is achieved, because only three base stations 104 must cooperate for a cluster optimization. But with an additional cluster tuning the complete long-term CSI of the whole network is needed.

After this so called intracluster optimization the beamforming and power weights for each cluster 200 are known and fixed. Additionally the allocation of users to cells for all scheduling steps is computed and is fixed too.

Beside these fixed values, the order of the scheduling steps, which is equivalent to the order of the column vectors of the scheduling matrices of the cluster 200, is not fixed. An additional gain for the sum rate can be achieved by a rearranging of these column vectors. This corresponds to a rearranging of the scheduling decisions of all clusters in a way that the interference among the clusters is minimized. This is also done according to a greedy scheme.

The greedy algorithm starts with a combination of cluster scheduling decisions, which maximize the sum rate in the first scheduling step. The computation of this combination is done by a search over all cluster scheduling allocations, which are the column vectors in the matrices, of all clusters 200. Thus in the first step the greedy algorithm combines the vectors with the maximum resulting sum rate. In the second step the algorithm computes the combination with the second highest sum rate and so on.

The greedy intercluster scheduling reuses the beamforming and power weights of the previously computed intracluster optimization, therefore the intercluster optimization can be achieved with a low additional communication between the clusters 200.

In each scheduling step $k$ only one user per cell is scheduled with a globally optimized beam only directed to this user. The beamforming optimization based on eigenbeamforming to the regarded users and power control optimization according to a fair max-min power balancing among the users in the complete scenario.

The beams corresponding to the strongest eigenmode are used for the computation of the direction of the beam lobes. Therefore the beams are directed to the strongest eigenmode of the spatial covariance matrix $\mathbf{R}_{c(j),j}$ between $j$ user and cell $c(j)$ which schedules this user:

$$\mathbf{R}_{c(j),j}\mathbf{u}_{c(j)} = \lambda_{j,j}^{\max}\mathbf{u}_{c(j)}, \qquad\qquad (1)$$

with

$$\lambda_{j,j}^{\max} = \max_{\mathbf{u}}\left\{\mathbf{u}_{c(j)}^{H}\mathbf{R}_{c(j),j}\mathbf{u}_{c(j)}\right\}. \qquad\qquad (2)$$

These beamforming vectors have the same power. Thus a subsequent power control is needed to balance the SINR of the scheduled users. The beamforming vectors can be separated into two optimization problems and computed as follows:

$$\mathbf{w}_{c(j)} = \sqrt{P_{c(j)}}\,\mathbf{u}_{c(j)}. \qquad\qquad (3)$$

The vectors $\mathbf{u}_{c(j)}$ are computed by the eigenvalue decomposition (1), (2) independent of the power values $P_{c(j),k}$. To indicate the scheduling step an additional index $k$ is used. $\mathbf{u}_{c(j)}$ are the beamforming vectors based on eigenbeamforming from c to user $i$.

Finally the optimization of the power values $P_{c(j),k}$ stored in $P_{k} = [P_{1,k}... PN_{c},k]^{T}$ can be carried out according to a max-min criterion as follows:

Objective function:

$$\max_{\mathbf{P}} \min_{i \in [\mathbf{S}]_{:,k}} \frac{p_{c(i),k} \mathbf{u}_{c(i),k}^{H} \mathbf{R}_{c(i),i} \mathbf{u}_{c(i),k}}{\displaystyle\sum_{\substack{j \in [\mathbf{S}_{\kappa}]_{:,k} \\ c(j) \neq c(i)}} p_{c(j),k} \mathbf{u}_{c(j),k}^{H} \mathbf{R}_{c(j),i} \mathbf{u}_{c(j),k} + n_{O}^{i}} \quad , \tag{4}$$

subject to

$$\sum_{i \in [\mathbf{S}_{\kappa}]_{:,k}} p_{c(i),k} \leq N_{c} \quad , \tag{5}$$

if a sum power constraint is used or

$$p_{c(i),k} \leq 1 \, , \tag{6}$$

if a per base station power constraint is used.

The optimization problem given in (4)-(6) is polynomial and has a low complexity. A linear program can be easily derived. The results are all power vectors $p_k$ who are stored in the matrix $\mathbf{P} = \begin{bmatrix} \mathbf{p}_1 & \cdots & \mathbf{p}_{K_s} \end{bmatrix}$. Herein the matrix $\mathbf{S}$ of dimension $N_c \times K_s$ defines the scheduling order over $K_s$ scheduling steps:

$[\mathbf{S}]c,k = \{i | \text{user } i \text{ is scheduled from cell } c \text{ in step } k\}$

$$k = 1 \ldots K_S \, , \tag{7}$$

$$c = 1 \ldots N_C \, .$$

The matrix $\mathbf{S}$ contains all indexes of the users according to their allocation to a cell and a scheduling decision. It contains scheduling orders for every cell and can also be expressed as follows:

$$\mathbf{S} = \begin{bmatrix} \mathbf{s}_1^T \\ \vdots \\ \mathbf{s}_{N_c}^T \end{bmatrix} . \tag{8}$$

Each vector $\mathbf{s}_c^T$ corresponds to a row of $\mathbf{S}$, which only contains the indexes of the users allocated to cell $c$. The dimension of $\mathbf{S}$ depends on the number of users allocated to the cells.

To fulfil the fairness criterion that each user is scheduled equally often in a given time interval, the maximum number of scheduling steps $K_s$ depends on the lowest common multiple of all numbers of the numbers users in all cells.

To define the optimization of the scheduling chronology a few further definitions are needed.

The initial set of users of a cell $c$ is given by the set $U_c$. This set defines also the temporal fairness:

Opportunistic Round Robin Scheduling (ORRS): In this case the initial set contains all users exactly on times: $U_c = \{i|$user $i$ is in cell $c\}$

Quasi Fair Scheduling (QFS): In this case the initial set only guarantees that each user is scheduled equally often in a given time interval:

$$U_c = \left\{ i \middle| \text{user } i \text{ is in cell } c \text{ and } i \text{ is inserted exactly } \frac{K_s}{n_c} \text{ times} \right\}$$

The set of free users of a cell $c$ in scheduling slot $k$ is given by the set

$$U_{c,k} = \left\{ i \middle| \text{user } i \text{ is in cell } c \text{ in slot } k \right\}.$$

The set of all users inside the system is given by:

$$U = \bigcup_{c=1}^{N_C} U_c .$$

With these definitions a scheme for ORRS or QFS can be simply defined: At the beginning for $k$=0 the all sets $U_{c,k}$ are initialized with $U_{c,k=0} = U_c$. The algorithm starts from an arbitrary cell $c$ and schedules one user from this cell in the next scheduling step $k$+1. Then this users will be excluded from the set:

$U_{c,k+1} = U_{c,k}$-$i$If the set is empty after couple of scheduling steps, the matrix $U_{c,k}$ will be reinitialized: $U_{c,k} = U_c$. In the case of QFS $U_{c,k}$ only needs to be initialized every $K_s$ steps.

Thus it is guaranteed that after a maximum number of $2n_c$ -1 steps in a cell all users are scheduled. The number of users in cell $c$ is denoted with $n_c$.

The optimization of the scheduling chronology for round robin scheduling is done by a greedy algorithm. The concept of this approach can be roughly summarized as follows:

Selection of the weakest user (user subjects to the strongest interference) in the system in a scheduling step $k$. Allocate users in this scheduling step $k$, who maximizes the sum rate with the weakest user.

The selection of the weakest user is simple. It is done by using the following matrix called interference matrix:

$$[\mathbf{\Phi}]_{i,j} = \lambda_{i,j} . \tag{9}$$

Here $\lambda_{i,j} = \max\left\{ \mathbf{u}_{c(j)}^H \mathbf{R}_{c(j),i} \mathbf{u}_{c(j)} \right\}$ and $\mathbf{u}_{c(j)}$ is given by an eigenbeam, according to (1), (2), from cell $c$ ($j$) to user $j$. With this matrix, a simple metric can be formulated to compute the total interference a user subjects to. The total amount of interference from the other cells $c(j)$ to a user $i \in U_{c(i),k}$ in a scheduling step k is given by:

$$I(i,\Phi) = \sum_{j\in[\mathbf{S}]_{:,k}} [\Phi]_{i,j} \cdot \qquad (10)$$

The *user* $i \in U_{c(i),k}$ is subject to the interference summed up in Eq. (10). Thus, a comparison of all $I(i,\Phi)$ values of all users $i \in U_{c(i),k}$ leads to the weakest user $i_{max} \in U_{c(i),k}$ :

$I(i, \Phi)$ is the interference of user I based on the interference matrix $\Phi$.

The first part of the algorithm is also a greedy step. The goal for a fair system is the maximization of the mean SINR of the weakest users. Therefore, at first a selection of the weakest user in a scheduling step $k$ is performed.

**_Step 1:_** *Weakest user selection*

*The weakest user $i_{max} \in U_{c(i),k}$ of scheduling step k is the user :*

$$i_{max} = \arg\max_{i}\{I(i,\Phi)\} \cdot \qquad (11)$$

This first step is followed by a second greedy approach. When the weakest user in scheduling step $k$ is known, then only users are scheduled, who maximize the sum rate of the system in this scheduling step. Thus, in each cell $c(i)$ only the free users $i \in U_{c(i),k}$ are scheduled in step $k$, who maximize the current sum rate of all scheduled users

**_Step 2_**: *Sum rate maximization*

*The sum rate of a cell $c(i)$ in scheduling step $k$ is maximized by adding the user to the scheduling matrix in step $k$, who maximize the function*

$$i = \arg\max_{\substack{i\in U_{c(i),k}\\ i\neq i_{max}}} \log\left(1 + \frac{p_{c(i),k}\lambda_{i,i,k}}{\sum_{\substack{j\in[\mathbf{S}]_{:,k}\\ c(j)\neq c(i)}} p_{c(j),k}\lambda_{i,j,k} + n_O^i}\right), \qquad (12)$$

*if the user $i_{max} \in U_{c(i),k}$ is the weakest user according to step 1.*

The two steps are used to define the greedy algorithm. The algorithm is initialized with sets of all $U_{c,k=0} = U_c$ and the interference matrix $\Phi$. The algorithm starts with the first scheduling step $k=1$. In each step the weakest user $i_{max}$ is selected according to Eq. (11). This user is then excluded from the set of free users $U_{c(imax),k}$ and added into the scheduling matrix $[\mathbf{S}]_{c(imax),k} = i_{max}$.

Then in each cell $c$ in the neighbourhood of the set of the already scheduled cells (neigh{$C$}, definition is given below) a user is added, who maximizes the mean SINR according to Eq. (12). These selected users are also excluded from the sets of free users $U_{c(i),k}$ and added to the scheduling matrix $[\mathbf{S}]_{c(i),k} = i$

If in each cell a greedy decision is performed, the algorithm continues with the next scheduling step $k=k+1$. After $k=LCM(\Lambda)$ step the algorithm terminates.

The optimization of the beamforming weights in Eq. (12) was done by the linear programming approach (4)-(6).

*Neighbourhood:*

*The neighbourhood is a function, which returns a set of cells. This function is defined by:*

$$neigh\{C\} = \{c \mid c \text{ is adjacent to all cells } \widetilde{c} \in C \text{ and there is no pattern between } c \text{ and } \widetilde{c}\} \qquad (13)$$

*Example* **1:**

*Consider the system given in example* 1. *In step* $k = 1$ *the* users {1,3,11} *are already scheduled. Then the* set *of free users in step* $k=2$ *are:*

$U_{c=1,k=2} = \{2\}$ $U_{c=2,k=2} = \{3,4,5\}$ $U_{c=3,k=2} = \{7,8,9,10,12\}$

*In this example* user $i = 2$ *subjects to interference given by:*

$$I(i,\Phi) = \sum_{j \in U_{c(j),k}} [\Phi]_{i,j} = \lambda_{2,3} + \lambda_{2,4} + \lambda_{2,5} + \lambda_{2,7} + \lambda_{2,8} + \lambda_{2,9} + \lambda_{2,10} + \lambda_{2,12}$$

**(0) Initialization:**

$$\forall c = 1...N_C \quad U_{c,k=0} = U_c; \qquad C = \{ \ \};$$

$$\forall i, j \quad [\Phi]_{i,j} = \lambda_{i,j};$$

**(1) Optimize Scheduling:**

**for** $k=1...LCM(\Lambda)$ **do begin**

**Step 1:** *Weakest user selection:*

$$i_{max} = \arg\max_{i}\{I(i,\Phi)\};$$

$$U_{c(i_{\max}),k} = \begin{cases} U_{c(i_{\max}),k} - i_{\max} & \text{if} \quad U_{c(i_{\max}),k} - i_{\max} \neq \varnothing \\ U_{c(i_{\max})} & \text{if} \quad U_{c(i_{\max}),k} - i_{\max} = \varnothing \end{cases};$$

$$C = C \cup c(i_{\max});$$

$$[\mathbf{S}]_{c(i_{\max}),k} = i_{\max};$$

**for all** $C \in neigh\,(C)$
**do begin**
**for all** $i \in U_{c,k}$
*add to the scheduling matrix* $[S]_{c(i),k} = i$
*and optimize the power*

$$\max_{\mathbf{p}} \min_{i \in [\mathbf{S}]_{:,k}} \frac{p_{c(i),k}\lambda_{i,i,k}}{\sum_{\substack{j \in [\mathbf{S}]_{:,k} \\ c(j) \neq c(i)}} p_{c(j),k}\lambda_{i,j,k} + n_O^i};$$

**s.t:**

$$p_{c(i),k} \leq 1;$$

**end**

**Step 2:** *Sum rate maximization:*

$$i^* = \arg\max_{i \in U_{c(l),k}} \sum_{l \in [\mathbf{S}]_{:,k} \cup i} \log\left(1 + \frac{p_{c(l),k}\lambda_{l,l,k}}{\sum_{\substack{j \in [\mathbf{S}]_{:,k} \\ c(j) \neq c(l)}} p_{c(j),k}\lambda_{l,j,k} + n_O^l}\right);$$

$$U_{c(i^*),k} = \begin{cases} U_{c(i^*),k} - i^* & \text{if} \quad U_{c(i^*),k} - i^* \neq \varnothing \\ U_{c(i^*)} & \text{if} \quad U_{c(i^*),k} - i^* = \varnothing \end{cases};$$

$$U_{c(i^\bullet),k} = \begin{cases} U_{c(i^\bullet),k} - i^\bullet & \text{if} \quad U_{c(i^\bullet),k} - i^\bullet \neq \varnothing \\ U_{c(i^\bullet)} & \text{if} \quad U_{c(i^\bullet),k} - i^\bullet = \varnothing \end{cases} ;$$

$$[\mathbf{S}]_{c(i^\bullet),k} = i^\bullet ;$$

**end**
**end**
**end**

**(2) Output: s , P**

The minimization of the intercluster interference is done in a very similar way like the global greedy scheduling scheme. After the optimization of the intracluster scheduling order of length $K_l$ and beamforming the scheduling matrices $S_l$ and the beamforming matrices $W_l$ for each cluster $l$ are known. Beside a description of the scheduling matrices with row vectors, the per cluster scheduling matrices can be also divided into column vectors $\mathbf{s}_{k,l}$ of length $N_l^C$ (number of cells per cluster), which define the scheduling allocation of users to cells in scheduling step $k$.

$$\hat{s}_{c,k,l} = \{ i | \text{user } i \text{ is scheduled from cell } c \text{ in cluster } l \text{ step } k \} ,$$

$$k = 1 \dots K_l ,$$

$$c = 1 \dots N_l^C . \tag{14}$$

Thus the scheduling matrix of a cluster $l$ with the *dimension* $N_l^C \times K_l$ is given by

$$\mathbf{S}_l = \begin{bmatrix} \hat{\mathbf{s}}_{1,l} & \cdots & \hat{\mathbf{s}}_{k,l} & \cdots & \hat{\mathbf{s}}_{K_l,l} \end{bmatrix} .$$

Upon now, the intracluster scheduling and the beamforming weights should be unchanged. Otherwise the locally performed scheduling decision will be destroyed and a performance loss will be the result. Therefore only a rearranging of the scheduling vectors $\hat{s}_{k,l}$ is possible. The cluster tuning has a very low complexity, because the beamforming weights are already computed in the local cluster-wise optimization.

The global scheduling matrix $\mathbf{S}$ of dimension $N_c \times K_s$ consists of a concatenation of the local cluster scheduling matrices:

$$\mathbf{S} = \begin{bmatrix} \mathbf{S}_1 & \cdots & \mathbf{S}_1 \\ & \cdots & \\ \mathbf{S}_{N_{CL}} & \cdots & \mathbf{S}_{N_{CL}} \end{bmatrix} . \tag{15}$$

Here $K_s$ is the lowest common multiple of the number of users per cell $n_c$ or the lowest common multiple of scheduling steps per cluster $^{K_l}$ :

$$K_S = LCM\{n_1, \quad \ldots, \quad n_{N_c}\} = LCM\{K_1, \quad \ldots, \quad K_{N_{CL}}\}.$$ (16)

The rearranging of the scheduling vectors $\hat{s}_{k,l}$ is done by a greedy strategy. A new matrix initialized with *zeros* $\mathbf{S}^{new} = \mathbf{0}_{Nc,Ks}$ is computed for the cluster tuning. During this optimization the only those column vectors are combined to the new scheduling matrix $\mathbf{S}^{new}$, who maximize the sum rate:

$$R_k = \sum_{i \in [S^{new}]_{:,k}} \log \left( 1 + \frac{p_{c(i),k} \lambda_{i,i,k}}{\sum_{\substack{j \in [S^{new}]_{:,k} \\ c(j) \neq c(i)}} p_{c(j),k} \lambda_{i,j,k} + n_O^i} \right).$$ (17)

Furthermore only a shifting over $^k$ is possible. An exchanging of column vectors $\hat{s}_{k,l}$ between different clusters $^l$ is not allowed. Thus in each the algorithm searches the optimum column vector, who combined with the column vectors of the other clusters, maximizes the sum rate in step $^k$. An ORRS is not possible with this cluster tuning but the constraint of a QFS is feasible.

**(0) Initialization:** $\boldsymbol{S}^{new} = \boldsymbol{0}_{Nc,ks}$

**(1) Per cluster greedy scheduling**

**Input:** $\mathbf{W}_l$ , $\mathbf{S}_l \Rightarrow \hat{\mathbf{s}}_{k,l} \ \forall k,l$

(2) Cluster Tuning:

    **for** $^{l=l}...^{N}CL$ **do begin**
    (for a given cluster)
    for $^{k=1}...^{K}_s$ do begin

add only those $\hat{s}$k,*l* to

$$\left[\mathbf{S}^{new}\right]_{l...l+N_l^C,k} = \hat{\mathbf{s}}_{k,l},$$

so that

$$R_k = \sum_{i \in [S^{new}]_{:,k}} \log \left( 1 + \frac{p_{c(i),k} \lambda_{i,i,k}}{\sum_{\substack{j \in [S^{new}]_{:,k} \\ c(j) \neq c(i)}} p_{c(j),k} \lambda_{i,j,k} + n_O^i} \right),$$

is maximized.
end
end

**(3) Output: S**$^{new}$

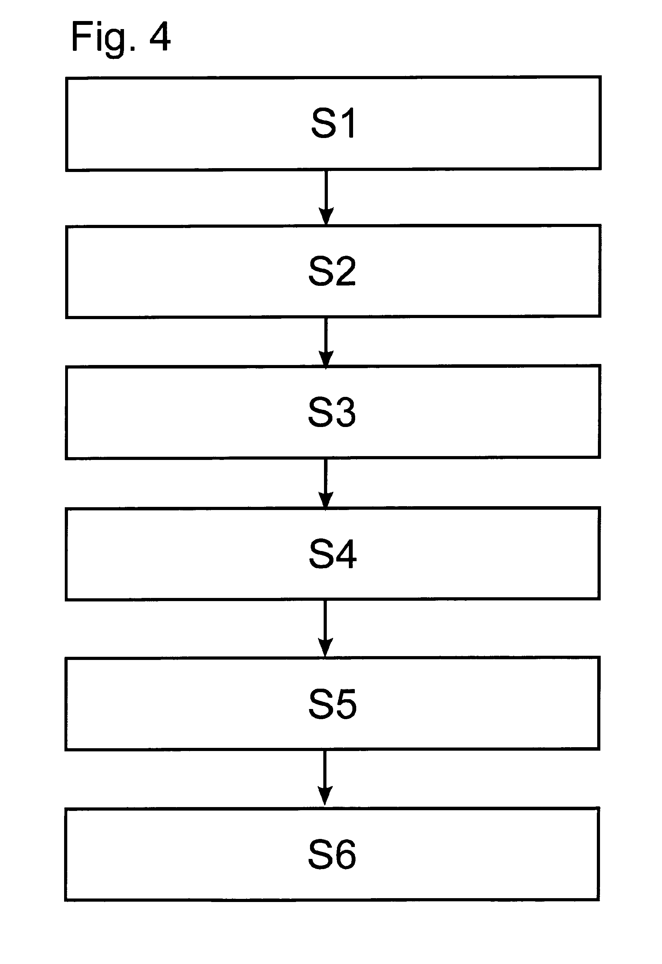

Fig. 4 is a flow diagram of a method comprising the step S1 of determining a first mobile station located in a first cell of the mobile telecommunication network, wherein the first mobile station has the mobile connection to the mobile telecommunication network with the lowest quality in comparison to all other mobile stations in the mobile telecommunication network

In a further step S2 determining at least one second cell, the at least one second cell being a neighbouring cell of the first cell. In step S3 a first group of mobile stations, wherein the first group comprises mobile stations being scheduled during a first scheduling time, and wherein scheduling the first group maximizes the mobile telecommunication network's sum rate.

In step S4 connections of mobile stations of the first group are scheduled during the first scheduling time. In step S5 at least one second group of mobile stations is determined. Each of the at least one second group comprises mobile stations being scheduled during a scheduling time differing from the first scheduling time, wherein the scheduling time of each of the at least one second group differs from the scheduling time of another group, and wherein scheduling the second group maximizes the mobile telecommunication network's sum rate. In step S6 connections of mobile stations of the at least one second group are scheduled during the respective scheduling time.

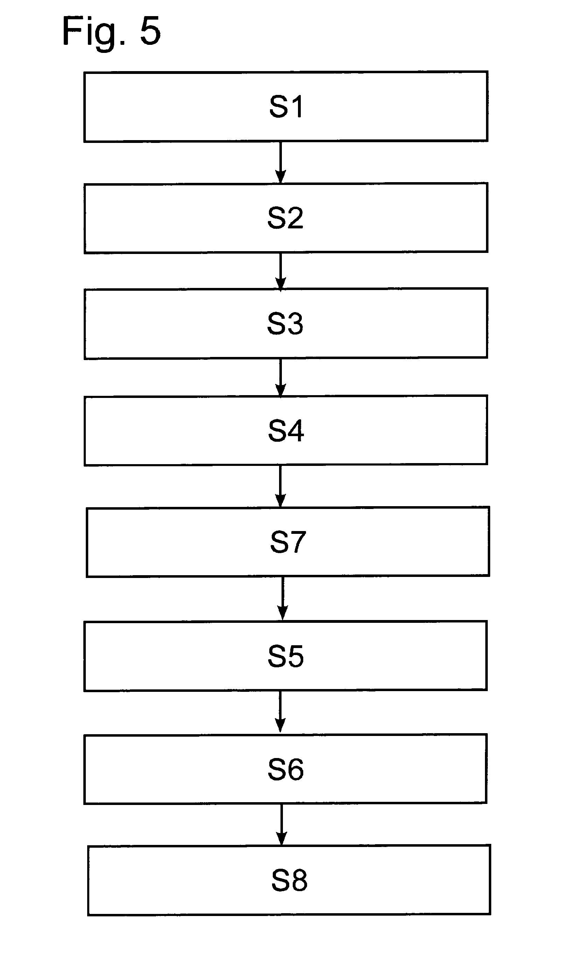

In Fig. 5 the steps S1-S4 are performed as in Fig. 4. Additionally after step S4 of scheduling connection of mobile stations of the first group, step S7 is performed. Step S7 consists of selecting signal beamforming weights of signals being transmitted to the first group, the adapted beamforming weights reducing signal interferences.

Then, steps S5 and S6 are performed as in Fig. 4, which consist of determining the at least one second group and scheduling connections of mobile station of the at least one second group. Afterwards, step S8 is performed. Step S8 consists of selecting signal beamforming weights of signals being transmitted to the at least one second group, the adapted beamforming weights reducing signal interferences.

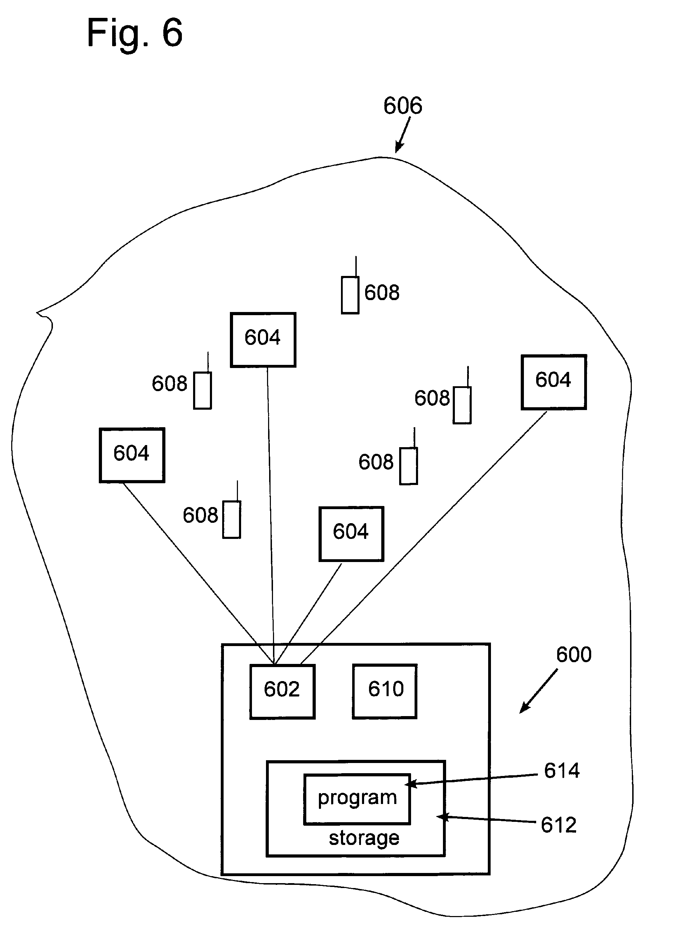

Fig. 6 is a block diagram of a telecommunication apparatus 600 comprising means 602 for communicating with base stations 604 of a mobile telecommunication network 606, a data storage 612 and a processor 610. Preferably, the processor 610 is adapted to execute a program 614 stored in the data storage 612. The program causes the processor to perform a method according to embodiments of the invention.

The mobile telecommunication network 606 comprises a plurality of mobile stations 608 and base stations 604. The mobile stations 608 can communicate with the base stations 604. Each mobile station 608 communicates with one base station 604.

List of reference numerals

100    mobile telecommunication network

102    cell

104    base station

200    cluster

202    cell

204    cell

206    cell

300    weakest user

302    cell

304    cell

306    cell

600    telecommunication apparatus

602    means for communicating

604    base stations

606    mobile telecommunication network

608    mobile station

610    processor

612    data storage

614    program


**Claims**

1.  Method of dynamically scheduling connections of a plurality of mobile stations (608) in a cellular mobile telecommunication network (100) to base stations (104), the cellular mobile telecommunication network having a plurality of cells (102), the connections being scheduled in time slots, wherein in each time slot the connection of one mobile station is scheduled in each cell of at least a subset of the cells, wherein the order of scheduled mobile stations is rearranged according to an opportunistic round robin scheduling scheme or to a quasi fair scheduling scheme, and wherein the rearranged order of scheduled mobile stations minimizes signal interferences in the mobile telecommunication network.

2.  Method according to claim 1, the method comprising the steps of:

    - determining (S1) a first mobile station located in a first cell of the mobile telecommunication network, wherein the first mobile station has the mobile connection to the mobile telecommunication network with the lowest quality in comparison to all other mobile stations in the mobile telecommunication network;
    - determining (S2) at least one second cell, the at least one second cell being a neighbouring cell of the first cell;
    - determining (S3) a first group of mobile stations, wherein the first group comprises mobile stations being scheduled during a first scheduling time, and wherein scheduling the first group maximizes the mobile telecommunication network's sum rate;
    - scheduling (S4) connections of mobile stations of the first group during the first scheduling time;
    - determining (S5) at least one second group of mobile stations, wherein each of the at least one second group comprises mobile stations being scheduled during a scheduling time differing from the first scheduling time, wherein the scheduling time of each of the at least one second group differs from the scheduling time of another group, and wherein scheduling the second group maximizes the mobile telecommunication network's sum rate; and
    - scheduling (S6) connections of mobile stations of the at least one second group during the respective scheduling time.

3.  Method of claim 2, the method comprising a further step of selecting signal beamforming weights of signals being transmitted to the group being scheduled, the selected beamforming weights reducing signal interferences.

4.  Method of claim 3, wherein the beamforming weights are adapted based on long time channel state information.

5.  Method of any one of the claims 2-4, wherein each of the at least one second group is determined according to a round robin scheduling scheme, an opportunistic round robin scheduling scheme or to a quasi fair scheduling scheme.

6.  Method of any one of the preceding claims, wherein a matrix comprises in each column a group, and wherein each row of the matrix comprises mobile stations whose connections are controlled by one base station.

7.  Method of claim 6, wherein the number of columns of the matrix is equal to the lowest common multiple of the numbers of mobile stations in the plurality of groups.

8. Method of any one of the preceding claims, wherein the order of scheduling the first and the at least one second group is changed after scheduling connections of mobile stations of the at least one second group.

9. Method of any one of the preceding claims, wherein the scheduled connections are connections between a base station and a mobile station.

10. A computer-readable storage medium containing instructions that when executed by a base station cause the base station to perform a method according to any one of the claims 1-9.

11. A telecommunication apparatus (600) comprising communication means (602) for communicating with base stations (604) of a mobile telecommunication network (606), a data storage (612) and a processor (610), wherein the processor is adapted to perform a method according to any one of the claims 1-9.

12. A mobile telecommunication network (606) comprising a plurality of mobile telecommunication apparatuses according to claim 11, a plurality of base stations and a plurality of mobile stations, wherein connections between the base stations and the mobile stations are scheduled according to a method according to any one of the claims 1-9.


**Amended claims in accordance with Rule 137(2) EPC.**

1. Method of dynamically scheduling connections of a plurality of mobile stations (608) in a cellular mobile telecommunication network (100) to base stations (104), the cellular mobile telecommunication network having a plurality of cells (102), the connections being scheduled in time slots, wherein in each time slot the connection of one mobile station is scheduled in each cell of at least a subset of the cells, wherein the order of scheduled mobile stations is rearranged according to an opportunistic round robin scheduling scheme or to a quasi fair scheduling scheme, the method comprising the steps of:

- determining (S1) a first mobile station located in a first cell of the mobile telecommunication network, wherein the first mobile station has the mobile connection to the mobile telecommunication network with the lowest quality in comparison to all other mobile stations in the mobile telecommunication network;
- determining (S3) a first group of mobile stations in the first cell, wherein the first group comprises mobile stations being scheduled during a first scheduling time, and wherein scheduling the first group maximizes the mobile telecommunication network's sum rate;
- scheduling (S4) connections of mobile stations of the first group during the first scheduling time;
- determining (S5) at least one second group of mobile stations, wherein each of the at least one second group comprises mobile stations being scheduled during a scheduling time differing from the first scheduling time, wherein the scheduling time of each of the at least one second group differs from the scheduling time of another group, and wherein scheduling the second group maximizes the mobile telecommunication network's sum rate; and
- scheduling (S6) connections of mobile stations of the at least one second group during the respective scheduling time.

2. Method of claim 1, the method comprising a further step of selecting signal beamforming weights of signals being transmitted to the group being scheduled, the selected beamforming weights reducing signal interferences.

3. Method of claim 2, wherein the beamforming weights are adapted based on long time channel state information.

4. Method of any one of the preceding claims, wherein each of the at least one second group is determined according to a round robin scheduling scheme, an opportunistic round robin scheduling scheme or to a quasi fair scheduling scheme.

5. Method of any one of the preceding claims, wherein a matrix comprises in each column a group, and wherein each row of the matrix comprises mobile stations whose connections are controlled by one base station.

6. Method of claim 5, wherein the number of columns of the matrix is equal to the lowest common multiple of the numbers of mobile stations in the plurality of groups.

7. Method of any one of the preceding claims, wherein the order of scheduling the first and the at least one second group is changed after scheduling connections of mobile stations of the at least one second group.

**8.** Method of any one of the preceding claims, wherein the scheduled connections are connections between a base station and a mobile station.

**9.** A computer-readable storage medium containing instructions that when executed by a base station cause the base station to perform a method according to any one of the claims 1-8.

**10.** A telecommunication apparatus (600) comprising communication means (602) for communicating with base stations (604) of a mobile telecommunication network (608), a data storage (612) and a processor (610), wherein the processor is adapted to perform a method according to any one of the claims 1-8.

**11.** A mobile telecommunication network (606) comprising a plurality of mobile telecommunication apparatuses according to claim 10, a plurality of base stations and a plurality of mobile stations, wherein connections between the base stations and the mobile stations are scheduled according to a method according to any one of the claims 1-8.

Fig. 1

Fig. 2

Fig. 3

# Fig. 4

Fig. 5

# Fig. 6

Europäisches
Patentamt

European
Patent Office

Office européen
des brevets

**EUROPEAN SEARCH REPORT**

Application Number

EP 09 29 0968

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAAD G KIANI ET AL: "Optimal and Distributed Scheduling for Multicell Capacity Maximization" IEEE TRANSACTIONS ON WIRELESS COMMUNICATIONS, IEEE SERVICE CENTER, PISCATAWAY, NJ, US LNKD-DOI:10.1109/TWC.2008.060503, vol. 7, no. 1, 1 January 2008 (2008-01-01) , pages 288-297, XP011200155 ISSN: 1536-1276 | 1,2,4-12 | INV. H04W72/12 |
| Y | * page 1, right-hand column, line 32 - page 2, left-hand column, line 3 * * paragraph [II.A]; figures 1,2 * * page 5, left-hand column, line 28 - right-hand column, line 5 * * Formula (16); page 6, right-hand column, line 1 - line 11 * * page 8, left-hand column, line 19 - line 31 * | 3 | |
| X | EP 1 414 253 A1 (MATSUSHITA ELECTRIC IND CO LTD [JP]) 28 April 2004 (2004-04-28) | 1,10-12 | TECHNICAL FIELDS SEARCHED (IPC) |
| A | * paragraph [0029] - paragraph [0045]; figures 4,5,7 * | 2-9 | H04W |
| X | US 2005/064872 A1 (OSSEIRAN AFIF [SE] ET AL) 24 March 2005 (2005-03-24) | 1,10-12 | |
| Y | * paragraph [0012]; figure 1 * | 3 | |
| A | * paragraph [0032] - paragraph [0033] * | 2,4-9 | |
| X | EP 0 843 494 A2 (LUCENT TECHNOLOGIES INC [US]) 20 May 1998 (1998-05-20) | 1,10-12 | |
| A | * page 2, line 38 - page 3, line 2 * * page 4, line 27 - line 31 * * page 5, line 38 - line 45 * * page 6, line 8 - line 11 * | 2-9 | |

The present search report has been drawn up for all claims

| Place of search | Date of completion of the search | Examiner |
|---|---|---|
| The Hague | 25 May 2010 | Orfanos, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 29 0968

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2010

| Patent document cited in search report | | Publication date | Patent family member(s) | | Publication date |
|---|---|---|---|---|---|
| EP 1414253 | A1 | 28-04-2004 | AU | 2003221065 A1 | 20-10-2003 |
| | | | CN | 1643951 A | 20-07-2005 |
| | | | WO | 03085998 A1 | 16-10-2003 |
| | | | US | 2004214602 A1 | 28-10-2004 |
| US 2005064872 | A1 | 24-03-2005 | AT | 428229 T | 15-04-2009 |
| | | | CN | 1860815 A | 08-11-2006 |
| | | | EP | 1668941 A1 | 14-06-2006 |
| | | | KR | 20070004520 A | 09-01-2007 |
| | | | WO | 2005029896 A1 | 31-03-2005 |
| EP 0843494 | A2 | 20-05-1998 | CA | 2216675 A1 | 08-05-1998 |
| | | | JP | 3086863 B2 | 11-09-2000 |
| | | | JP | 10190569 A | 21-07-1998 |
| | | | US | 5914946 A | 22-06-1999 |